# EUROPEAN PATENT SPECIFICATION

(11) **EP 1 722 568 B1**
(45) Date of publication and mention of the grant of the patent: **28.10.2015**
(21) Application number: 06113771.7
(22) Date of filing: 10.05.2006
(51) Int. Cl.: H04L 29/06, H04N 7/16, H04N 21/4363, H04N 21/8543, H04L 29/08

(54) **Content handling**
Inhaltbehandlung
Traitement de contenu

(30) Priority: 11.05.2005 KR 2005039414
(43) Date of publication of application: 15.11.2006
(73) Proprietor: Samsung Electronics Co., Ltd., Suwon-si, Gyeonggi-do, 443-742 (KR)
(72) Inventor: Lee, Ye-youl, 1018-1503 Mokdong Apt., Seoul (KR); Hwang, Yoo-seung, Yangcheon-gu, Seoul (KR); Kim, Giu-yeol, 109-807 LG Village 1-cha Apt., Gyeonggi-do (KR)
(74) Representative: Walaski, Jan Filip

(56) References cited:
- EP-A- 1 133 120
- EP-A2- 1 429 561
- BOX D ET AL: "Simple Object Access Protocol (SOAP) 1.1" HTTP://WWW.W3.ORG, 8 May 2000 (2000-05-08), XP002163943 Internet Citation

## Description

The present invention relates to content handling.

In recent years, with the development of digital audio/video (hereinafter, referred to as "A/V") processing techniques, various A/V devices, such as digital televisions, set-top boxes, digital versatile disk (DVD) players, and digital amplifiers, are installed and used in a home or an office. A user can conveniently control these A/V devices using a remote control device or the like. However, as the number of A/V devices to be installed in a predetermined space is increased, control of the individual A/V devices becomes more complex and difficult.

Accordingly, techniques have been studied to connect a plurality of A/V devices to one another for systematization, so as to allow a user to conveniently control the systematized A/V devices. According to these studies, A/V devices are connected to other A/V devices, via a network interface, so as to construct a single A/V network system as a whole.

As a part of these studies, an eXpandible Home Theater (XHT) technique specification, which is middleware for A/V home networking, has recently been suggested and developed. The XHT technique is a digital TV-oriented home network solution which has been developed by Samsung Electronics Co., Ltd and which has been adopted as an industry standard by the Consumer Electronics Association (CEA).

The XHT technique controls multiple digital TVs as well as A/V devices connected to the digital TVs by way of IEEE 1394 cables, which can stably transfer a plurality of HD (high definition) signals and Internet Protocol data which are the standard widely used in Internet communications. For example, with the XHT technique, a user can watch a digital broadcast in their bedroom while receiving a digital TV broadcast in their living room.

In addition, an inexpensive network interface unit (NIU) has been developed on the basis of the XHT technique, in the form of a memory card. Such a network interface unit (NIU) can be easily changed according to a type of broadcasting signal, such as terrestrial , satellite or cable signals, which results in decreased costs for broadcast providers. In particular, the XHT technique enables various kinds of portal services through a built-in browser of the digital TV.

Operation sequences of the A/V devices implemented using the XHT technique will now be described. First, local IP addresses are individually allocated to the A/V devices in the XHT network by a predetermined address allocation algorithm. Next, the individual A/V devices with the local IP addresses allocated thereto express device information by an XML (extensible Markup Language) file (DeviceInfo.xml) according to a defined syntactic format (defined by a file called DeviceInfo.xsd) and transmit the XML file to other A/V devices. The DeviceInfo.xml file records a URI (Uniform Resource Identifier) of a file (XHT931.xsd) which describes a set of HTTP (Hyper Text Transfer Protocol) commands for operating the A/V device. The A/V device which generates the DeviceInfo.xml file refers to the XHT931.xsd file, generates an XML file (XHT931.xml) which records the HTTP command supported by the corresponding device, and transmits the XML file to other A/V devices.

An A/V device receives a DeviceInfo.xml file expressing device information of another A/V device, and an XHT931.xml file recording the HTTP commands supported by the other A/V device. Then, the A/V device grasps the information of the other A/V device, which transmitted the files, on the basis of the received files, so as to control the other A/V device using the HTTP commands.

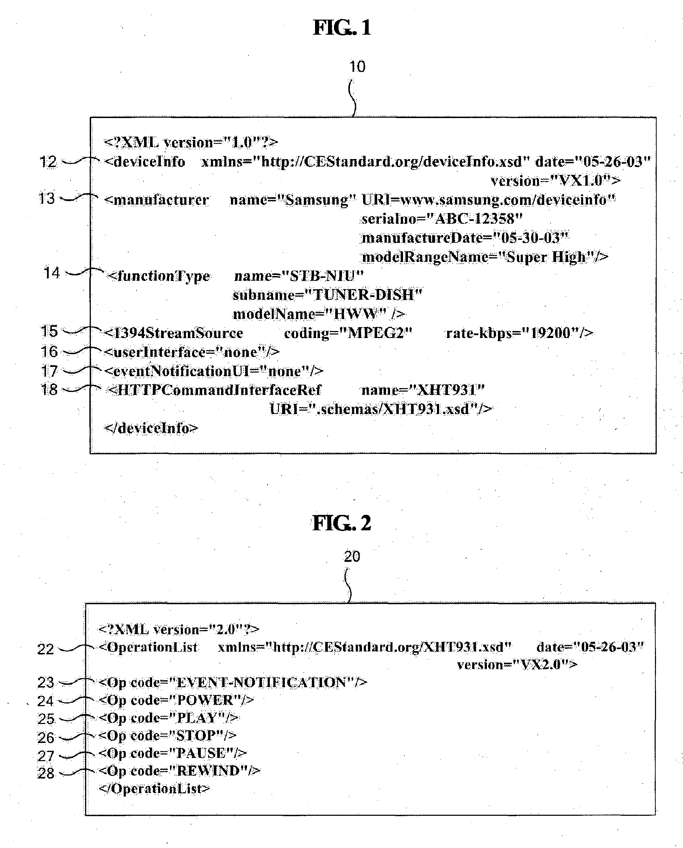

Figure 1 shows an example of a DeviceInfo.xml file 10 generated in an A/V device according to the grammar structure (syntax) of the DeviceInfo.xsd file. Such a file 10 includes a deviceInfo tag 12, a manufacturer tag 13, a functionType tag 14, a 1394StreamSource tag 15, a userInterface tag 16, an eventNotificationUI tag 17, and an HTTPCommandInterfaceRef tag 18.

The deviceInfo tag 12 includes positional information, a date, and a version of the deviceInfo.xsd file. The manufacturer tag 13 includes a manufacturer name, URI, and manufacturing date of the A/V device. The functionType tag 14 includes a functional name, sub-name, and model name of the product. The 1394StreamSource tag 15 includes a coding system and bit rate of a data stream.

In addition, the userInterface tag 16 includes information about a user interface. The eventNotificationUI tag 17 includes information about a user interface which notifies occurrence of events. In the example shown in Figure 1, the functions about the user interfaces are not supported. The HTTPCommandInterfaceRef tag 18 includes the name of the XHT specification supporting the HTTP commands and the URI defining the commands (XHT931.xsd).

Figure 2 shows an example of an XHT931.xml file 20 generated in each A/V device according to the grammar structure (syntax) of the XHT931.xsd file. Such a file 20 includes an OperationList tag 22, and a plurality of operation codes 23, 24, 25, 26, 27, 28 to provide different types of functions of the A/V device.

The OperationList tag 22 includes the URI, date, and version of the XHT931.xsd file to be referred to. Next, operation codes which are supported by the corresponding A/V device are recorded. In the example shown in Figure 2, the A/V device supports a function 23 of notifying other A/V devices of the occurrence of a change in device status (EVENT-NOTIFICATION), a function 24 of turning on or off a power supply (POWER), a function 25 of playing an assigned contents (PLAY), a function 26 of stopping the contents being played (STOP), a function 27 of pausing the contents being played (PAUSE), and a function 28 of rewinding the contents (REWIND).

If a first A/V device, which receives DeviceInfo.xml and XHT931.xml, wants to control a second A/V device which transmits the XML files, the first A/V device can control the second A/V device by way of the HTTP commands which are combinations of the URI and the operation codes.

For example, when the first A/V device is a digital TV and the second A/V device is a source device which stores a transport stream (TS), the user issues a watch command of a program included in the transport stream (TS) to the digital TV using a remote control device. If an IP address allocated to the source device is 192.168.0.2, the digital TV (i.e., the first A/V device) just transfers the HTTP command of "http://192.168.0.2./CEA931?play&press" to the source device (i.e., the second A/V device). The source A/V device according to the XHT specification has a web server, and a device controller which converts the above-described HTTP command into an internal device operation. Accordingly, the source device can perform the corresponding operation according to the transferred HTTP command. Therefore, the source device transmits the transport stream (TS) to the digital TV using the IEEE 1394 network, and the digital TV decodes the received transport stream (TS) and displays the decoded result for the user.

In case of a simple web site, movement to corresponding web sites is easily performed through links provided on a graphical user interface (GUI) screen of an A/V device. However, with only conventional A/V network standards, various contents on the web and Ethernet cannot be provided through a direct connection between the A/V devices, such as the XHT digital TVs. In particular, the XHT is configured to transmit an MPEG-2 transport stream, which is content data, onto data link hierarchies of the IEEE 1394 network using an isochronous channel. Accordingly, content information such as text in forms of HTML of the existing web site can be directly processed, while various contents such as motion picture data and macromedia flash contents cannot be provided.

Prior art document EP1429561 discloses a system including television displays in respective homes and media processing systems (MPSs) supporting consumption of the media by the displays. The MPSs include associated network addresses. A server receives a request that identifies one of the associated addresses to support delivery via a communication network of the media from MPS to the home for consumption by the corresponding display.

The present invention seeks to provide a method and apparatus for providing contents services in an A/V network which can share various contents of devices connected to an A/V network device by an Ethernet-based IP network and contents on the Internet.

The invention is defined by the claims.

In accordance with an aspect of the present invention, a control apparatus is provided on an audio/video (AV) network to search web services providing contents on a different network connected to the A/V network by an A/V gateway and to receive information about the contents from a device providing the web services, thereby controlling the web services using the information about the contents. Such a control apparatus comprises a web browser which receives a control command relative to the contents from a user; a simple object access protocol (SOAP) client transceiver which receives a content information message including the information about the contents depending on a SOAP specification; a web service message managing unit which generates a control command message including the control command depending on the SOAP specification, analyzes the contents information message, and extracts the information about the contents to be provided to the web browser; an A/V network transceiver which receives stream data of the contents; a content decoder which decodes stream data, and a content display unit which outputs decoded stream data.

According to an aspect of the present invention, the different network is a TCP/IP Ethernet-based network such as the Internet. The control apparatus depends on an extendible home theater (XHT) specification, and the A/V network is an IEEE 1394 network.

In accordance with another aspect of the present invention, an A/V gateway which connects an A/V network to a different network, comprises a content information requesting unit which requests information about contents to be provided by web services on a distributed network when a predetermined condition is satisfied; a TCP/IP transceiver which receives an ML document including the information about the contents as a response to the request from a service providing device providing the web services; a web service content managing unit which analyzes the ML document including the information about the contents, and which generates a reconstructed ML document on the basis of the analysis result; a SOAP server transceiver which transmits the reconstructed ML document; and an A/V network transceiver which transmits a content stream corresponding to the information about the contents.

In accordance with yet another aspect of the present invention, a method of providing content services using web services which provide contents on a different network connected to an A/V network by an A/V gateway, comprises requesting the A/V gateway for content information; receiving a content information page corresponding to the request of the content information; causing a user to select specified contents through the content information page and to input a control command relative to the specified contents; transmitting the control command; and receiving stream data of the contents depending on the control command.

In accordance with another aspect of the present invention, a method of providing content services using web services which provide contents on a different network connected to an A/V network by an A/V gateway, comprises requesting content information to be provided by the web services on a distributed network when a predetermined condition is satisfied; receiving an ML document including the content information as a response to the request from a service providing device providing the web services; analyzing the ML document including the content information, and generating a reconstructed ML document on the basis of the analysis result; transmitting the reconstructed ML document; and transmitting a content stream corresponding to the content information.

Embodiments of the invention will now be described by way of example only with reference to the accompanying drawings, wherein:
Figure 1 shows an example of a DeviceInfo.xml file generated in an A/V device according to a grammar structure of a DeviceInfo.xsd file;
Figure 2 shows an example of an XHT931.xml file generated in an A/V device according to a grammar structure of an XHT931.xsd file;
Figure 3 shows a configuration of an entire system according to the present invention;
Figure 4 is a block diagram showing a configuration of a control apparatus according to the present invention;
Figure 5 is a block diagram showing a configuration of an audio/video gateway according to the present invention;
Figure 6 shows an example of a service search request message in a web service technique;
Figure 7 shows an example of a response message to a service search request message in a web service technique;
Figure 8 shows an example of a Web Services Description Language (WSDL) message including detailed information of a service;
Figure 9 shows an example of a file which defines the grammar structure for converting the WSDL file shown in Figure 8 into an extensible Markup Language (XML) file to be supported by the control apparatus shown in Figure 4; and
Figure 10 is a flow chart showing an overall operation of a method of providing a content service according to the present invention.

In the accompanying drawings, like reference numerals refer to like elements throughout.

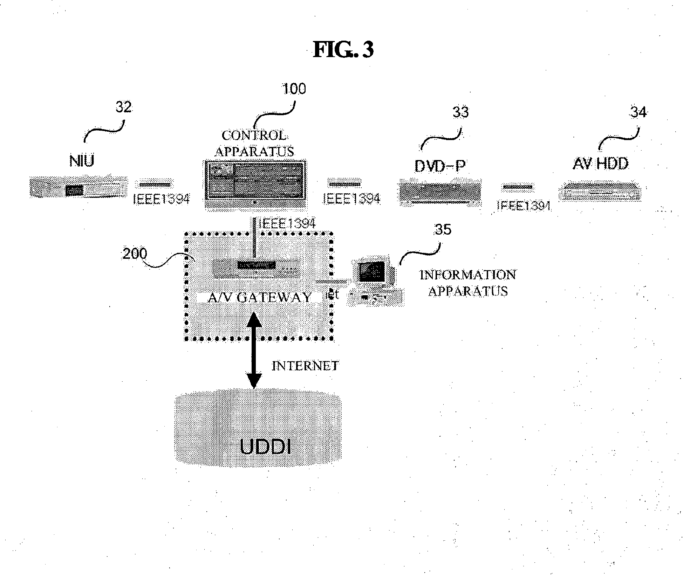

Referring to Figure 3, an entire system is shown. The system includes a control apparatus 100, such as a digital TV, one or more A/V devices 32 to 34 which are connected to the control apparatus 100 by an A/V network, and an A/V gateway 200 which connects the control apparatus 100 to an Ethernet-based PC 35 or the Internet. The A/V devices 32, 33, 34 can be a network interface unit (NIU), a DVD player (DVD-P) and a hard disk drive (HDD) with an IEEE 1394 interface, respectively.

The control apparatus 100 includes at least a content decoder (not shown) which decodes contents (multimedia data such as video, image, and sound), and a content display unit (not shown) which displays the decoded contents and outputs the result for display to a user. The control apparatus 100 can request information about contents to be provided by web services and can also perform control of the desired contents. The control apparatus 100 may be any one of a digital TV, a plasma display panel (PDP), an LCD monitor, or an audio receiver.

The A/V gateway 200 connects the control apparatus 100 of the A/V network to a TCP/IP Ethernet-based network such as the Internet. The A/V gateway 200 receives information about contents to be provided in the form of web services according to a request from the control apparatus 100, and provides a user interface (hereinafter, referred to as 'UI') including a contents list from that information to the control apparatus 100. The A/V gateway 200 may be implemented by a stand-alone device having only the above-described functions in the A/V network or may be a module in the control apparatus 100.

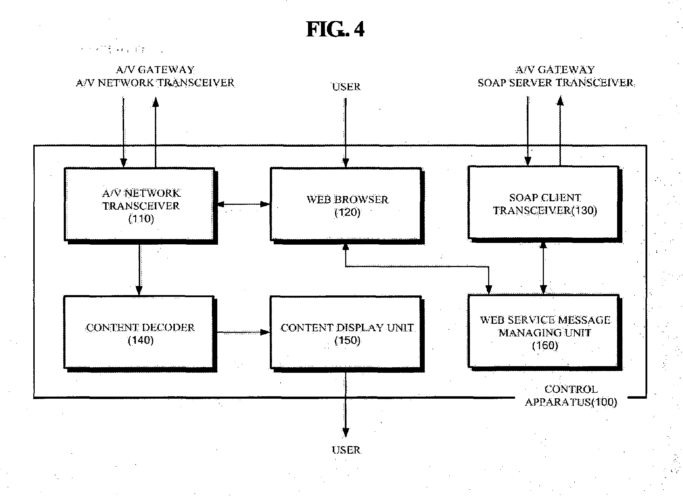

Figure 4 is a block diagram showing a configuration of the control apparatus 100 in one embodiment of the present invention. The control apparatus 100 includes an A/V network transceiver 110, a web browser 120, a simple object access protocol (SOAP) client transceiver 130, a content decoder 140, a content display unit 150, and a web service message managing unit 160.

The control apparatus 100 receives information about desired contents and receives a control command relative to the contents from the user through the web browser 120. The web browser 120 provides the received user command to the web service message managing unit 160.

The web service message managing unit 160 generates a SOAP message including the user command, and transmits the generated SOAP message to the A/V gateway 200 through the SOAP client transceiver 130. Then, the web service message managing unit 160 analyses a SOAP message received from the A/V gateway 200 by the SOAP client transceiver 130, and provides information to be displayed on the web browser 120.

The A/V network transceiver 110 receives a content stream from the A/V gateway 200 and provides the received content stream to the content decoder 140. When an IEEE 1394 network is used for the A/V network, an MPEG-2 transport stream, which is to be content data, is transmitted onto data link hierarchies of the IEEE 1394 network using an isochronous channel. At this time, the A/V network transceiver 110 takes charge of transmission and reception of contents data.

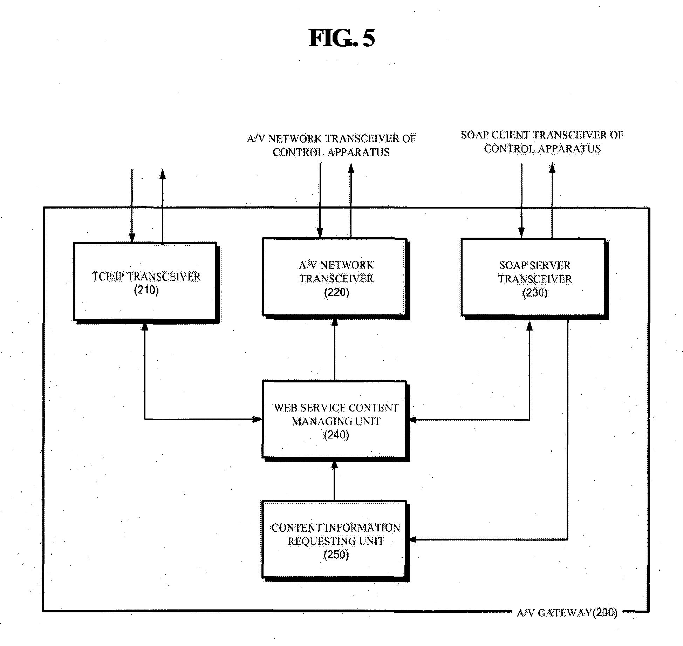

The SOAP client transceiver 130 transmits the SOAP message generated by the web service message managing unit 160 to the A/V gateway 200. Further, the SOAP client transceiver 130 receives texts or simple web pages in forms of HTML or XML, which are transmitted by a SOAP server transceiver 230 (Figure 5) of the A/V gateway 200, using a simple object access protocol (SOAP) and control data of an A/V network specification, and provides the received data to the web service message managing unit 160.

The content decoder 140 decodes the content stream provided by a service providing device 300, which content stream includes the contents selected by the user, and provides the decoded result to the contents display unit 150. The content stream may be a video stream of an MPEG-2 TS format or an audio stream of an MPEG Layer 3 (hereinafter, referred to as 'MP3') format. Various video or audio formats can be used. However, in the case of the content being an image file, such as a JPEG file, (i.e. not when not in a streaming format), the content is decoded after downloading.

The service providing device 300 may be the information apparatus 35 or some other device not shown in the drawings.

The content display unit 150 renders the contents decoded by the content decoder 140 for the user. When the content is in video or image format, the content is displayed using a display device, such as a cathode ray tube (CRT), a liquid crystal display (LCD), or a plasma display panel (PDP). When the content is in audio format, the content is rendered through an amplifier or speaker.

A control apparatus 100 in another embodiment of the present invention may not include the SOAP client transceiver 130 and the web service message managing unit 160. In this case, the control apparatus 100 transmits various user commands depending on the A/V network specification to the A/V gateway 200 through the A/V network transceiver 110. Then, a web service contents managing unit 240 (Figure 5) of the A/V gateway 200 converts the messages depending on the A/V network specification into messages depending on a SOAP specification.

Fig. 5 is a block diagram showing the configuration of the A/V gateway 200 in one embodiment. The A/V gateway 200 includes a TCP/IP transceiver 210, an A/V network transceiver 220, a SOAP server transceiver 230, a web service content managing unit 240, and a content information requesting unit 250.

The content information requesting unit 250 requests content information provided by web services on a distributed network through the web service content managing unit 240 when a predetermined condition is satisfied. For example, the content information requesting unit 250 can request the content information on the assumption that a content list request is received from the control apparatus 100. Alternatively, the content information requesting unit 250 can set a cycle for requesting the content information and request the content information for each cycle.

The content information can include meta data such as the title, kind (video, image, or audio), player (director or singer), generation date, encoding system, or bit rate of the contents, the storage position of the contents (URI), and control operations (play, stop, or pause) supported by the contents.

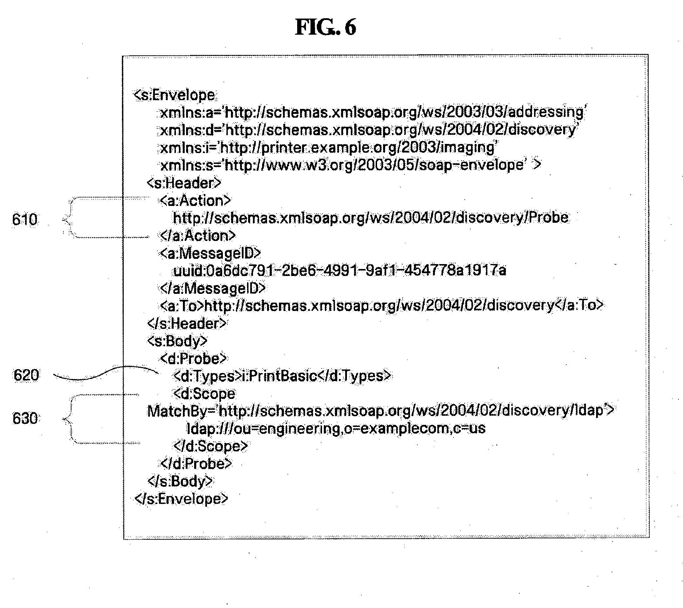

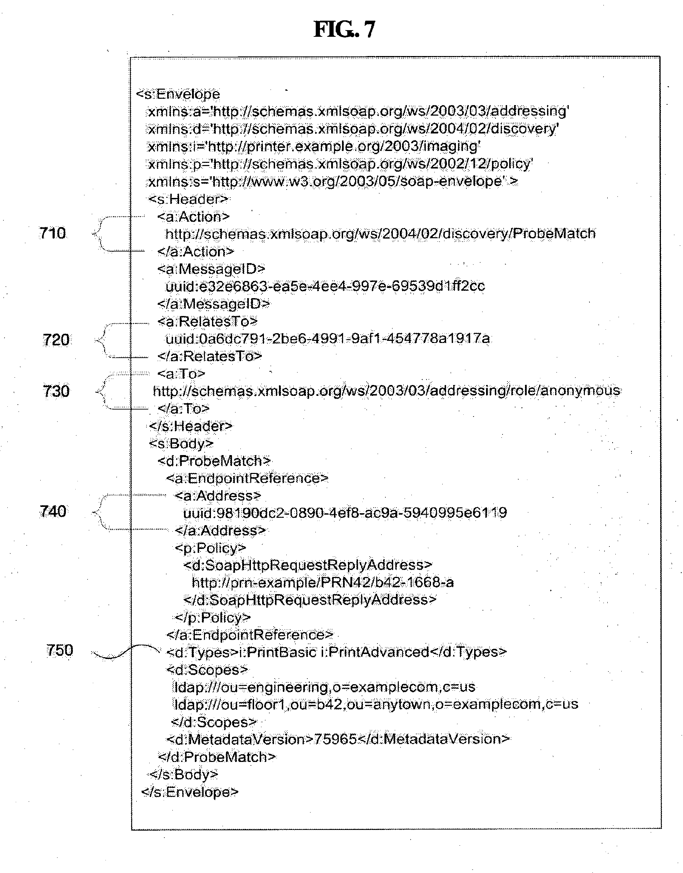

The web service content managing unit 240 generates a web service search request message according to the content information request, and broadcasts the web service search request message through the TCP/IP transceiver 210. The format of the web service search request message will be described below with reference to Figure 6. The web service content managing unit 240 receives a response message to the web service search request from the service providing device 300, and receives and analyses a mark-up language document (hereinafter, referred to as ML document) including detailed information about the contents. The ML document includes an XML (eXtensible Markup Language) document, an HTML (HyperText Markup Language) document, an SGML (Standard Generalized Markup Language) document, and various files syntactically defining data depending on defined formats. Further, the web service contents managing unit 240 searches specified contents on the web through UDDI (Universal Discovery Description Integration), analyses detailed information of the contents expressed by WSDL (Web Services Description Language), and provides a reconstructed ML document in accordance with the corresponding control apparatus 100. The format of the response message to the web service search request, the format of the WSDL document, and the format of the reconstructed ML document will be described below with reference to Figure 7, Figure 8 and Figure 9, respectively.

The web service content managing unit 240 analyses the ML document received from the service providing device 300, and separates control data and content data from the received ML document. Control data is transmitted to the control apparatus 100 through the SOAP server transceiver 230, and content data is transmitted to the control apparatus 100 through the A/V network transceiver 220.

In another embodiment, the web service contents managing unit 240 analyses all SOAP messages received from the TCP/IP transceiver 210 and converts them into the A/V network protocols when the control apparatus 100 does not process the SOAP message (i.e. when the web service message managing unit 160 and SOAP client transceiver 130 (Figure 4) are not provided). Then, the web service content managing unit 240 can analyse the information about the contents received from the service providing device 300, reconstruct information including functions supported by the control apparatus 100, and provide the reconstructed information to the control apparatus 100.

The A/V network transceiver 220 transmits the content stream, and the SOAP server transceiver 230 transmits control data to the control apparatus 100 and receives control data from the control apparatus 100.

Figure 6 shows an example of a service search request message in a web service technique. This example relates to a probe message which is generated by the control apparatus 100 or the A/V gateway 200 in order to search for a printer, which message is to be then broadcasted.

An action tag 610 indicates that the message is a probe message, and a Types tag 620 is defined such that only a target service implementing Print Basic responds to the message. A Scope tag 630 defines the response to the target service to 'Engineering Department'.

Figure 7 shows an example of a response message to a service search request message in a web service technique. This example relates to a response message in respect of the probe message for the printer search shown in Figure 6.

An Action tag 710 indicates that the message is the response message to the probe message (ProbeMatch). A RelatesTo tag 720 indicates that the message is the response message to the printer search message. A To tag 730 indicates that the response message is transmitted to a source IP address and port in a transmission header of the probe message. An Address tag 740 includes a stable and unique identifier relative to a predetermined target service over the network interface, address, and IPv4/6. In this case, the value is the URI (Uniform Resource Identifier) having a UUID (Universal Unique IDentifier) schema. A Types tag 750 lists the types to be implemented by the target service, for example, Print Basic.

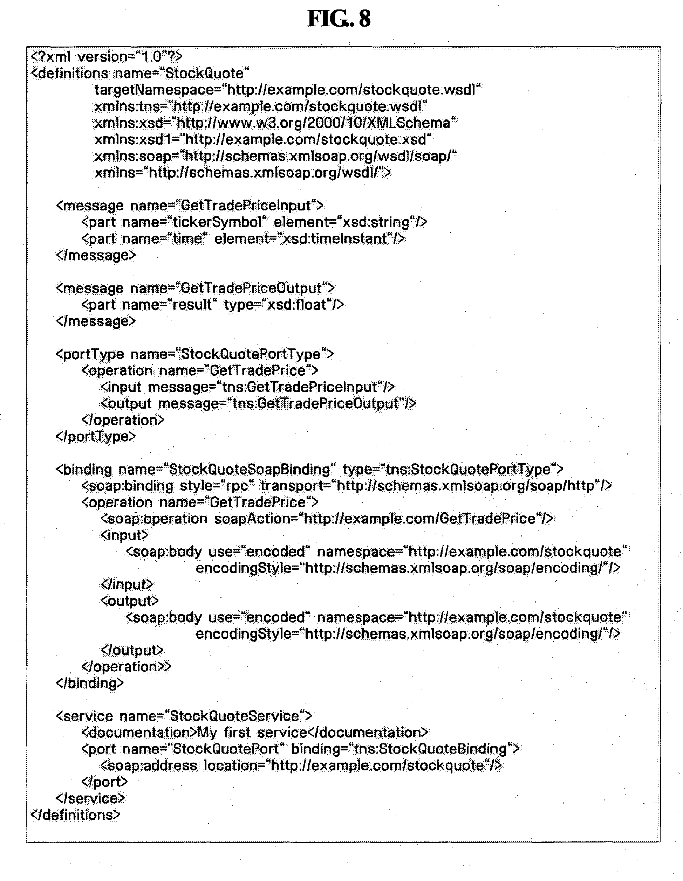

Figure 8 shows an example of a WSDL message including detailed information of a service. This example describes that a request of GetTradePrices SOAP 1.1 is transmitted to a StockQuote service through SOAP 1.1 HTTP binding.

The request gets a string of characters of stock quote symbols and returns an array of stock quotes recorded by an application which defines a TimePeriod structure including start time and end time during a period between the start time and the end time. An RPC (Remote Procedure Call) signature corresponding to this service has tickerSymbol and timePeriod as parameters and frequency as output parameters, and returns an array of real numbers.

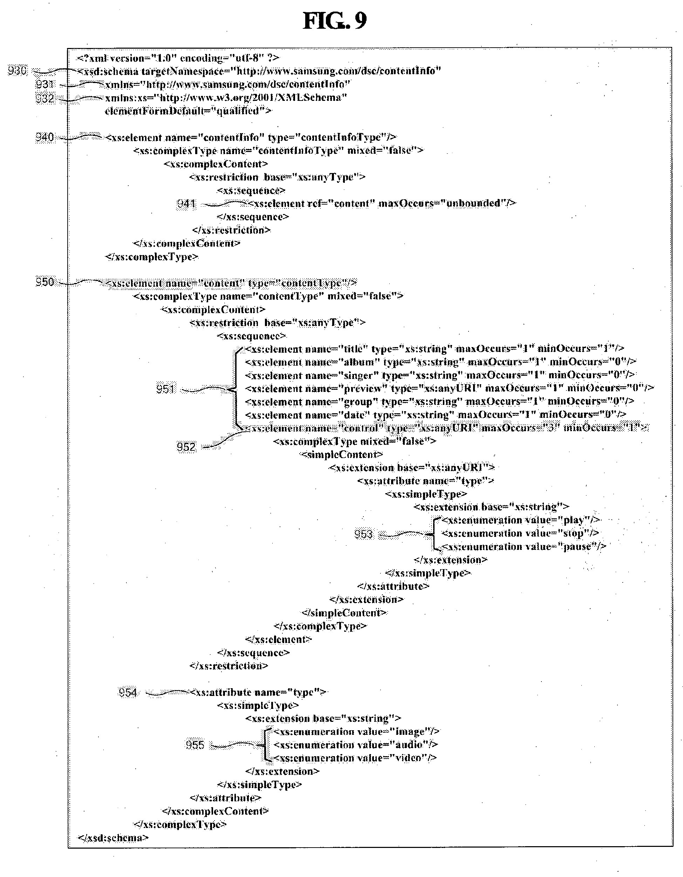

Figure 9 shows an example of a file which defines the grammar structure for converting the WSDL file shown in Figure 8 into an XML file supported by the control apparatus 100.

In an xsd:schema tag 930, a parameter xmlns 931 represents a position of the file, and a parameter xmlns:xs 932 represents a position of a file defining an XML specification language format.

In an Xs:element tag 940, a parameter 'name' is assigned to ContentInfo, and a parameter 'type' is assigned to ContentInfoType. In an Xs:element tag 941, the number of occurrence of a parameter 'content', that is, maxOccurs, is defined as 'unbounded'. Here, the number of occurrence of the parameter 'content' can be the number of contents possessed by the service providing device 300, and thus the maximum is not limited. The parameter maxOccurs may be set to a limiting number so as to limit the number of contents that are transferred to the A/V gateway 200 by a service providing device 300.

A parameter 'name' of an Xs:element tag 950 is assigned to 'Content', and a parameter 'type' is assigned to 'ContentType'. Further, a tag called Content has elements such as title, album, singer, preview, group, date, and control as low-level elements 951.

Here, maxOccurs represents maximum expression times and minOccurs represents minimum expression times. For example, when maxOccurs is "1" and minOccurs is "1", the element is unconditionally displayed only once. Further, when maxOccurs is "1" and minOccurs is "0", the element may be displayed once or may be not displayed.

As a low-level element 953 of a control tag 952, one of three types of play, stop, and pause is provided. In the Control tag 952, maxOccurs is "3" and minOccurs is "1". From this example, it can be understood that a maximum of three of play, stop, and pause are displayed and a minimum of one of them is displayed.

An xs:attribute tag 954, which represents the attribute of the xs:element tag 950 having the name 'content', has the name 'type', and the type is divided into three categories 955 of image, audio, and video.

The individual components shown in Figures 4 and 5 can be implemented by software components or hardware components such as FPGA (Field-Programmable Gate Array) or ASIC (Application-Specific Integrated Circuit). However, the components are not limited to software or hardware. The components can be configured in an addressable storage medium or may be configured to execute one or more processors. For example, the components include software, object-oriented software, elements such as classes and tasks, processes, functions, properties, procedures, subroutines, segments of program codes, drivers, firmware, micro-codes, circuits, data, databases, data structures, tables, arrays, and variables. The components can be subdivided into smaller components or a plurality of components may be incorporated into one component.

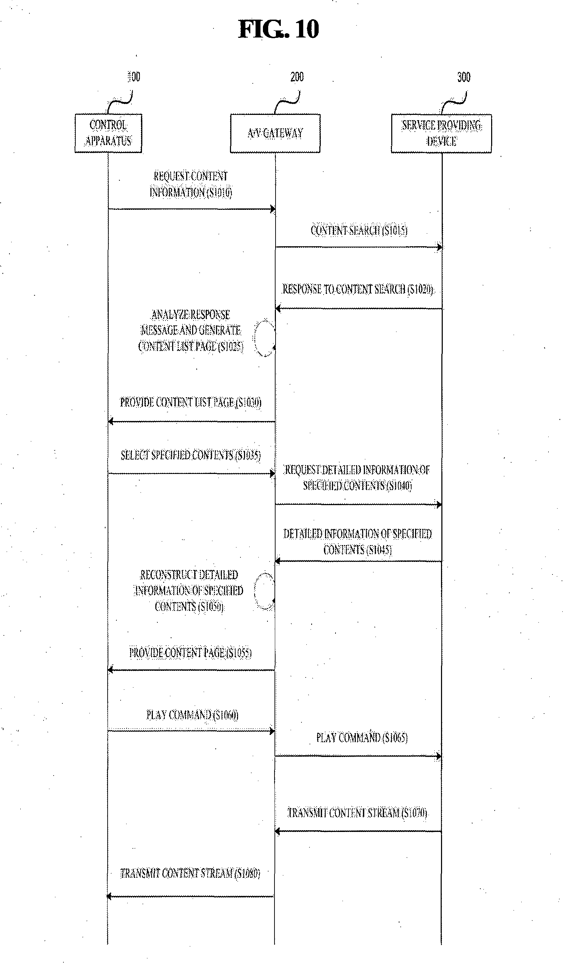

Figure 10 is a flow chart showing an overall operation of a method of providing a content service according to the present invention. As shown in Figure 10, the content service is provided between the control apparatus 100 and the service providing device 300, via the A/V gateway 200.

The control apparatus 100 receives information about contents to be provided by the web service, such as the name and kind of the contents, from the user through the web browser 120, and requests the A/V gateway 200 for the information about the contents (step S1010). The A/V gateway 200 generates and broadcasts the web service search message including the information about the contents to be searched so as to search a desired content service of the user (step S1015). The format of the web service search request message is shown in Figure 6.

The service providing device 300, which provides the content service to be searched by the A/V gateway 200, generates the response message including information indicating that it is a device providing the corresponding content service and transmits the generated response message to the A/V gateway (step S1020). The format of the response message to the web service search request is shown in Figure 7. The A/V gateway 200 receives the response message, analyses the response message in XML format, and generates a content list page to be provided to the control apparatus 100 (step S1025). One or more response messages can be generated. Accordingly, the A/V gateway 200 can analyse the individual response messages, extract only required information, and generate the content list page to be provided to the control apparatus 100.

If the A/V gateway 200 provides the content list page to the control apparatus 100 (step S1030), the control apparatus 100 requests that the user select the specified contents of the content list page. If the user selects the specified contents of the contents list page, the control apparatus 100 transfers the selection of the specified contents to the A/V gateway 200 (step S1035), and the A/V gateway 200 generates and transmits the message requesting the detailed information of the selected contents to the service providing device 300 (step S1040). The service providing device 300, which receives the detailed information request message, generates a message including the detailed information of the selected contents and transmits the generated message to the A/V gateway 200 (step S1045). The format of the message including the detailed information about the contents is shown in Figure 8.

The A/V gateway 200 analyses the message including the detailed information about the specified contents, reconstructs the message into information which can be provided to the control apparatus 100 (step S1050), and provides the content information page including the reconstructed information of the contents to the control apparatus 100 (step S1055). The control apparatus 100 can receive a control command from the user, relative to the contents, by use of the content information page. For example, if a play command is received (step S1060), the play command is transferred to the A/V gateway 200 through the content information page (step S1060). Then, the A/V gateway 200 converts the play command into the control message, which is converted by the RPC of the web service, and transmits the converted control message to the service providing device 300 (step S1065). The service providing device 300, which receives the play command control message, transmits the content stream to be played to the A/V gateway 200 (step S1070), and the A/V gateway 200 transmits the received content stream to the control apparatus 100 through the 1394 data link hierarchy (step S1080). The control apparatus 100 decodes the received content stream by the content decoder 140, and outputs the decoded stream to the user through the content display unit 150.

Accordingly, various complex content services can be provided by applying conventional web service techniques to the A/V network.

As previously discussed, various components of the control apparatus 100 and the A/V gateway 200, as shown in Figures 3 to 5, can be implemented in software or hardware, such as, an application specific integrated circuit (ASIC) and a field-programmable gate array (FPGA). As such, it is intended that the processes described herein be broadly interpreted as being equivalently performed by software, hardware, or a combination thereof. Software modules can be written via a variety of software languages, including C, C++, Java, Visual Basic, and many others. The various software modules may also be integrated in a single application executed on various types of wire or wireless cards, such as PCMCIA cards, PCI cards or USB card. These software modules may include data and instructions which can also be stored on one or more machine-readable storage media, such as dynamic or static random access memories (DRAMs or SRAMs), erasable and programmable read-only memories (EPROMs), electrically erasable and programmable read-only memories (EEPROMs) and flash memories; magnetic disks such as fixed, floppy and removable disks; other magnetic media including tape; and optical media such as compact discs (CDs) or digital video discs (DVDs). Instructions of the software routines or modules may also be loaded or transported into the wireless cards or any computing devices on the wireless network in one of many different ways. For example, code segments including instructions stored on floppy discs, CD or DVD media, a hard disk, or transported through a network interface card, modem, or other interface device may be loaded into the system and executed as corresponding software routines or modules. In the loading or transport process, data signals that are embodied as carrier waves (transmitted over telephone lines, network lines, wireless links, cables, and the like) may communicate the code segments, including instructions, to the network node or element. Such carrier waves may be in the form of electrical, optical, acoustical, electromagnetic, or other types of signals.

While there have been illustrated and described what are considered to be examplary embodiments of the present invention, it will be understood by those skilled in the art and as technology develops that various changes and modifications, may be made, and equivalents may be substituted for elements thereof without departing from the true scope of the present invention. Many modifications, permutations, additions and sub-combinations may be made to adapt the teachings of the present invention to a particular situation without departing from the scope thereof.

For example, the components of the control apparatus 100 and the A/V gateway 200 can be implemented in a single ASIC chipset (hardware) or firmware installed at an existing card to perform the functions as described. In addition, alternative embodiments of the invention can be implemented as a computer program product for use with a computer system. Such a computer program product can be, for example, a series of computer instructions stored on a tangible data recording medium, such as a diskette, CD-ROM, ROM, or fixed disk, or embodied in a computer data signal, the signal being transmitted over a tangible medium or a wireless medium, for example microwave or infrared. The series of computer instructions can constitute all or part of the functionality described above, and can also be stored in any memory device, volatile or non-volatile, such as semiconductor, magnetic, optical or other memory device.

Furthermore, both the software modules can also be machine-readable storage media, such as dynamic or static random access memories (DRAMs or SRAMs), erasable and programmable read-only memories (EPROMs), electrically erasable and programmable read-only memories (EEPROMs) and flash memories; magnetic disks such as fixed, floppy and removable disks; other magnetic media including tape; and optical media such as compact discs (CDs) or digital video discs (DVDs).

Accordingly, it is intended, therefore, that the present invention not be limited to the various example embodiments disclosed, but that the present invention includes all embodiments falling within the scope of the appended claims.

## Claims

1. Apparatus (100) for use in an audio/video network including a plurality of audio/video devices (32, 33, 34), the apparatus comprising:
means (160) for generating a request for content information relating to content stored at a remote internet source;
means (110, 130) for sending the request, via the network, to an internet gateway (200) associated with the network and for receiving the requested content information in response to the request;
means (120) operable to receive a content selection and a content control command, relating to the selected content, from a user, wherein the sending and receiving means (110, 130) is further arranged to send the content selection and the content control command to the internet gateway (200); and
wherein the means (110, 130) operable to receive the requested content information comprises a simple object access protocol SOAP client transceiver (130),
and further comprises an audio/video network transceiver (110) configured to receive a content data from the gateway (200),
wherein the SOAP client transceiver (130) is configured to receive control data, the control data being separate from the content data.

2. An apparatus according to claim 1 or claim 2, wherein the content information includes at least one of location information relating to the remote internet source, meta data of the content, and one or more control commands supported by the content.

3. A gateway (200) operable to connect an audio/video network including a plurality of audio/video devices (32, 33, 34) to the internet, the gateway (200) comprising:
a content information requesting unit (250) operable to request content information relating to content stored at a remote internet source;
internet transceiver means (210) operable to receive the content information from the remote internet source in response to the request;
means (220, 230) for sending the content information to a control apparatus (100) associated with the network;
means (220, 230) for receiving a user content selection and a user content control command relating to the selected content from the control apparatus (100), wherein the internet transceiver means (210) is further operable to send the content selection and the content control command to the remote internet source and to receive the selected content; and
a network transceiver (220) operable to transmit a content data corresponding to the selected content to the control apparatus (100) in accordance with the content control command,
wherein the content information is received as a mark-up language ML document;
wherein the means (230) operable to send the content information is a simple object access protocol server transceiver, and
further comprising a web service content managing unit (240) operable to separate the content information into content data and control data, to transmit the content data through the audio/video network transceiver (220) and to transmit the control data through the simple object access protocol SOAP server transceiver (230) to the control apparatus (100).

4. A gateway according to claim 3, wherein the content information is sent as a mark-up language ML document.

5. A gateway according to claims 3 or 4, wherein the content information includes at least one of location information relating to the remote internet source, meta data of the content, and one or more control commands supported by the content.

6. A gateway according to any one of claims 3 to 5, wherein the ML document is an extensible mark-up language (XML) document.

7. A method of accessing content in an audio/video network including a plurality of audio/video devices (32, 33, 34), the method comprising:
generating, at a control apparatus (100) associated with the network, a request for content information relating to content stored at a remote internet source;
sending the request to an internet gateway associated with the network;
receiving the requested content information at the control apparatus, in response to the request;
receiving, from a user, a content selection and a content control command relating to the selected content;
sending the content selection and the content control command to the remote internet source via the internet gateway; and
receiving, at the controller, the selected content in the form of streamed content data and in accordance with the control command,
receiving a content data from the gateway (200) with an audio/video network transceiver (110),
receiving control data, the control data being separate from the content data.

8. A method of providing access to content in an audio/video network including a plurality of audio/video devices (32, 33, 34), the method comprising:
requesting content information relating to content stored at a remote internet source;
receiving the content information from the remote source in response to the request and sending the content information to a control apparatus (100) associated with the network;
receiving a user content selection and a user content control command relating to the selected content from the control apparatus (100);
sending the content selection and the content control command to the remote internet source;
receiving the selected content as a mark-up language ML document; and
transmitting a content data corresponding to the selected content to the control apparatus (100) in accordance with the content control command,
sending the content information to the control apparatus (100) with a simple object access protocol server transceiver, and
separating the content information into content data and control data, transmitting the content data through an audio/video network transceiver (220) and transmitting the control data through a simple object access protocol server SOAP transceiver (230) to the control apparatus (100).

9. A computer program comprising instructions which, when executed by data processing apparatus, causes the data processing apparatus to perform the method according to claim 7 or 8.

10. A computer-readable medium having stored thereon a computer program according to claim 9.

11. A signal carrying a computer program according to claim 9.

12. A system, comprising:
a gateway (200); and
an apparatus (100) according to claim 1 or 2.

13. A system according to claim 12 comprising a service providing device operable to provide web services.

14. A system according to claim 12 or claim 13, in which the gateway (200) is a gateway as claimed in any of claims 3 to 6.

15. A gateway (200) operable to connect an audio/video network including a plurality of audio/video devices (32, 33, 34) to the internet, the gateway (200) comprising:
a content information requesting unit (250) operable to request content information relating to content stored at a remote internet source;
internet transceiver means (210) operable to receive the content information from the remote internet source in response to the request;
means (220, 230) for sending the content information to a control apparatus (100) associated with the network;
means (220, 230) for receiving a user content selection and a user content control command relating to the selected content from the control apparatus (100), wherein the internet transceiver means (210) is further operable to send the content selection and the content control command to the remote internet source and to receive the selected content; and
an audio/video network transceiver (220) operable to transmit a content data corresponding to the selected content to the control apparatus (100) in accordance with the content control command,
wherein the content information is received as a mark-up language ML document,
further comprising a web service content managing unit (240) configured to analyse all simple object access protocol server SOAP messages received from the internet transceiver means (210) and convert said messages into an audio/video protocol used by the audio/video network, and transmit said converted messages to the control apparatus (100).

## Patentansprüche

1. Vorrichtung (100) zur Verwendung in einem Audio/Video-Netzwerk mit mehreren Audio/Video-Geräten (32, 33, 34), wobei die Vorrichtung Folgendes umfasst:
Mittel (160) zum Erzeugen einer Anforderung von Inhaltsinformationen in Bezug auf an einer fernen Internetquelle gespeicherten Inhalt;
Mittel (110, 130) zum Senden der Anforderung, über das Netzwerk, zu einem mit dem Netzwerk assoziierten Internet-Gateway (200) und zum Empfangen der angeforderten Inhaltsinformationen als Reaktion auf die Anforderung;
Mittel (120) zum Empfangen einer Inhaltsauswahl und eines Inhaltssteuerbefehls in Bezug auf den gewählten Inhalt von einem Benutzer, wobei das Sende- und Empfangsmittel (110, 130) ferner zum Senden der Inhaltsauswahl und des Inhaltssteuerbefehls zu dem Internet-Gateway (200) ausgelegt ist; und
wobei das Mittel (110, 130) zum Empfangen der angeforderten Inhaltsinformationen einen SOAP-(Simple Object Access Procotol)-Client-Transceiver (130) umfasst,
und ferner einen Audio/Video-Netzwerk-Transceiver (110) umfasst, der zum Empfangen von Inhaltsdaten von dem Gateway (200) konfiguriert ist,
wobei der SOAP-Client-Transceiver (130) zum Empfangen von Steuerdaten konfiguriert ist, wobei die Steuerdaten getrennt von den Inhaltsdaten sind.

2. Vorrichtung nach Anspruch 1 oder Anspruch 2, wobei die Inhaltsinformationen wenigstens eines aus Ortsinformationen in Bezug auf die ferne Internetquelle, Metadaten des Inhalts und einem oder mehreren durch den Inhalt unterstützten Steuerbefehlen beinhalten.

3. Gateway (200) zum Verbinden eines mehrere Audio/Video-Geräte (32, 33, 34) beinhaltenden Audio/Video-Netzwerks mit dem Internet, wobei das Gateway (200) Folgendes umfasst:
eine Inhaltsinformationenanforderungseinheit (250) zum Anfordern von Inhaltsinformationen in Bezug auf an einer fernen Internetquelle gespeicherten Inhalt;
einen Internet-Transceiver (210) zum Empfangen der Inhaltsinformationen von der fernen Internetquelle als Reaktion auf die Anforderung;
Mittel (220, 230) zum Senden der Inhaltsinformationen zu einer mit dem Netzwerk assoziierten Steuervorrichtung (100) ;
Mittel (220, 230) zum Empfangen einer Benutzerinhaltsauswahl und eines Benutzerinhaltssteuerbefehls in Bezug auf den gewählten Inhalt von der Steuervorrichtung (100), wobei der Internet-Transceiver (210) ferner die Aufgabe hat, die Inhaltsauswahl und den Inhaltssteuerbefehl zu der fernen Internetquelle zu senden und den gewählten Inhalt zu empfangen; und
einen Netzwerk-Transceiver (220) zum Senden von dem gewählten Inhalt entsprechenden Inhaltsdaten zu der Steuervorrichtung (100) gemäß dem Inhaltssteuerbefehl,
wobei die Inhaltsinformationen als ML-(Mark-Up-Language)-Dokument empfangen werden;
wobei das Mittel (230) zum Senden der Inhaltsinformationen ein SOAP-(Simple Object Access Protocol)-Server-Transceiver ist, und
ferner eine Webservice-Inhaltsverwaltungseinheit (240) zum Aufteilen der Inhaltsinformationen in Inhaltsdaten und Steuerdaten, zum Senden der Inhaltsdaten durch den Audio/Video-Netzwerk-Transceiver (220) und zum Senden der Steuerdaten durch den SOAP-(Simple Object Access Protocol)-Server-Transceiver (230) zur Steuervorrichtung (100) umfasst.

4. Gateway nach Anspruch 3, wobei die Inhaltsinformationen als ML-(Mark-Up Language)-Dokument gesendet werden.

5. Gateway nach Anspruch 3 oder 4, wobei die Inhaltsinformationen wenigstens eines aus Ortsinformationen in Bezug auf die ferne Internetquelle, Metadaten des Inhalts und einem oder mehreren von dem Inhalt unterstützten Steuerbefehlen beinhalten.

6. Gateway nach einem der Ansprüche 3 bis 5, wobei das ML-Dokument ein XML-(Extensible Mark-Up Language)-Dokument ist.

7. Verfahren zum Zugreifen auf Inhalt in einem Audio/Video-Netzwerk mit mehreren Audio/Video-Geräten (32, 33, 34), wobei das Verfahren Folgendes beinhaltet:
Erzeugen, an einer mit dem Netzwerk assoziierten Steuervorrichtung (100), einer Anforderung von Inhaltsinformationen in Bezug auf an einer fernen Internetquelle gespeicherten Inhalt;
Senden der Anforderung zu einem mit dem Netzwerk assoziierten Internet-Gateway;
Empfangen der angeforderten Inhaltsinformationen an der Steuervorrichtung als Reaktion auf die Anforderung;
Empfangen, von einem Benutzer, einer Inhaltsauswahl und eines Inhaltssteuerbefehls in Bezug auf den gewählten Inhalt;
Senden der Inhaltsauswahl und des Inhaltssteuerbefehls zu der fernen Internetquelle über das Internet-Gateway; und
Empfangen, an der Steuerung, des gewählten Inhalts in Form von gestreamten Inhaltsdaten gemäß dem Steuerbefehl,
Empfangen von Inhaltsdaten von dem Gateway (200) mit einem Audio/Video-Netzwerk-Transceiver (110),
Empfangen von Steuerdaten, wobei die Steuerdaten von den Inhaltsdaten getrennt sind.

8. Verfahren zum Bereitstellen von Zugang zu Inhalt in einem Audio/Video-Netzwerk mit mehreren Audio/Video-Geräten (32, 33, 34), wobei das Verfahren Folgendes beinhaltet:
Anfordern von Inhaltsinformationen in Bezug auf an einer fernen Internetquelle gespeicherten Inhalt;
Empfangen der Inhaltsinformationen von der fernen Quelle als Reaktion auf die Anforderung und Senden der Inhaltsinformationen zu einer mit dem Netzwerk assoziierten Steuervorrichtung (100);
Empfangen einer Benutzerinhaltsauswahl und eines Benutzerinhaltssteuerbefehls in Bezug auf den gewählten Inhalt von der Steuervorrichtung (100);
Senden der Inhaltsauswahl und des Inhaltssteuerbefehls zu der fernen Internetquelle;
Empfangen des gewählten Inhalts als ML-(Mark-Up Language)-Dokument; und
Senden von Inhaltsdaten, die dem gewählten Inhalt entsprechen, zu der Steuervorrichtung (100) gemäß dem Inhaltsteuerbefehl,
Senden der Inhaltsinformationen zu der Steuervorrichtung (100) mit einem SOAP-(Simple Object Access Protocol)-Server-Transceiver, und
Aufteilen der Inhaltsinformationen in Inhaltsdaten und Steuerdaten, Senden der Inhaltsdaten durch einen Audio/Video-Netzwerk-Transceiver (220) und Senden der Steuerdaten durch einen SOAP-(Simple Object Access Protocol)-Server-Transceiver (230) zur Steuervorrichtung (100).

9. Computerprogramm, das Befehle umfasst, die bei Ausführung durch eine Datenverarbeitungsvorrichtung bewirken, dass die Datenverarbeitungsvorrichtung das Verfahren nach Anspruch 7 oder 8 ausführt.

10. Computerlesbares Medium, auf dem ein Computerprogramm nach Anspruch 9 gespeichert ist.

11. Signal, das ein Computerprogramm nach Anspruch 9 führt.

12. System, das Folgendes umfasst:
ein Gateway (200); und
eine Vorrichtung (100) nach Anspruch 1 oder 2.

13. System nach Anspruch 12, das ein dienstleistendes Gerät zum Bereitstellen von Webdiensten umfasst.

14. System nach Anspruch 12 oder Anspruch 13, wobei das Gateway (200) ein Gateway nach einem der Ansprüche 3 bis 6 ist.

15. Gateway (200) zum Verbinden eines mehrere Audio/Video-Geräte (32, 33, 34) beinhaltenden Audio/Video-Netzwerks mit dem Internet, wobei das Gateway (200) Folgendes umfasst:
eine Inhaltsinformationenanforderungseinheit (250) zum Anfordern von Inhaltsinformationen in Bezug auf an einer fernen Internetquelle gespeicherten Inhalt;
einen Internet-Transceiver (210) zum Empfangen der Inhaltsinformationen von der fernen Internetquelle als Reaktion auf die Anforderung;
Mittel (220, 230) zum Senden der Inhaltsinformationen zu einer mit dem Netzwerk assoziierten Steuervorrichtung (100) ;
Mittel (220, 230) zum Empfangen einer Benutzerinhaltsauswahl und eines Benutzerinhaltssteuerbefehls in Bezug auf den gewählten Inhalt von der Steuervorrichtung (100), wobei der Internet-Transceiver (210) ferner die Aufgabe hat, die Inhaltsauswahl und den Inhaltssteuerbefehl zu der fernen Internetquelle zu senden und den gewählten Inhalt zu empfangen; und
einen Audio/Video-Netzwerk-Transceiver (220) zum Senden von dem gewählten Inhalt entsprechenden Inhaltsdaten zu der Steuervorrichtung (100) gemäß dem Inhaltssteuerbefehl,
wobei die Inhaltsinformationen als ML-(Mark-Up Language)-Dokument empfangen werden;
und ferner eine Webservice-Inhaltsverwaltungseinheit (240) umfasst, die zum Analysieren aller von dem Internet-Transceiver (210) empfangenen SOAP-(Simple Object Access Protocol)-Server-Nachrichten und zum Umwandeln der genannten Nachrichten in ein von dem Audio/Video-Netzwerk benutztes Audio/Video-Protokoll und zum Senden der genannten umgewandelten Nachrichten zu der Steuervorrichtung (100) konfiguriert ist.

## Revendications

1. Appareil (100) destiné à être utilisé dans un réseau audio/vidéo comportant une pluralité de dispositifs audio/vidéo (32, 33, 34), l'appareil comprenant :
un moyen (160) pour générer une requête d'informations de contenu concernant un contenu mémorisé au niveau d'une source Internet distante ;
un moyen (110, 130) pour envoyer la requête, par l'intermédiaire du réseau, à une passerelle Internet (200) associée au réseau et pour recevoir les informations de contenu requises en réponse à la requête ;
un moyen (120) exploitable pour recevoir une sélection de contenu et une commande de contrôle de contenu, concernant le contenu sélectionné, depuis un utilisateur, dans lequel le moyens d'envoi et de réception (110, 130) est agencé en outre pour envoyer la sélection de contenu et la commande de contrôle de contenu à la passerelle Internet (200) ; et
dans lequel le moyen (110, 130) exploitable pour recevoir les informations de contenu requises comprend un émetteur-récepteur client à protocole d'accès d'objet simple, SOAP, (130),
et comprend en outre un émetteur-récepteur de réseau audio/vidéo (110) configuré pour recevoir des données de contenu depuis la passerelle (200),
dans lequel l'émetteur-récepteur client SOAP (130) est configuré pour recevoir des données de contrôle, les données de contrôle étant distinctes de données de contenu.

2. Appareil selon la revendication 1 ou la revendication 2, dans lequel les informations de contenu comportent au moins l'une d'informations de position relatives à la source Internet distante, de métadonnées du contenu, et d'une ou plusieurs commandes de contrôle prises en charge par le contenu.

3. Passerelle (200) exploitable pour connecter un réseau audio/vidéo comportant une pluralité de dispositifs audio/vidéo (32, 33, 34) à l'Internet, la passerelle (200) comprenant :
une unité de requête d'informations de contenu (250) exploitable pour requérir des informations de contenu concernant un contenu mémorisé au niveau d'une source Internet distante ;
un moyen d'émetteur-récepteur Internet (210) exploitable pour recevoir les informations de contenu depuis la source Internet distante en réponse à la requête ;
un moyen (220, 230) pour envoyer les informations de contenu à un appareil de contrôle (100) associé au réseau ;
un moyen (220, 230) pour recevoir une sélection de contenu d'utilisateur et une commande de contrôle de contenu d'utilisateur concernant le contenu sélectionné depuis l'appareil de contrôle (100), dans lequel le moyen d'émetteur-récepteur Internet (210) est exploitable en outre pour envoyer la sélection de contenu et la commande de contrôle de contenu à la source Internet distante et pour recevoir le contenu sélectionné ; et
un émetteur-récepteur de réseau (220) exploitable pour transmettre des données de contenu correspondant au contenu sélectionné à l'appareil de contrôle (100) conformément à la commande de contrôle de contenu,
dans lequel les informations de contenu sont reçues sous forme de document à langage de balisage ML ;
dans lequel le moyen (230) exploitable pour envoyer les informations de contenu est un émetteur-récepteur de serveur à protocole d'accès d'objet simple, et
comprenant en outre une unité de gestion de contenu de service Internet (240) exploitable pour séparer les informations de contenu en données de contenu et données de contrôle, transmettre les données de contenu par le biais de l'émetteur-récepteur de réseau audio/vidéo (220) et transmettre les données de contrôle par le biais de l'émetteur-récepteur de serveur à protocole d'accès d'objet simple SOAP (230) à l'appareil de contrôle (100).

4. Passerelle selon la revendication 3, dans lequel les informations de contenu sont envoyées sous forme de document à langage de balisage ML.

5. Passerelle selon les revendications 3 ou 4, dans laquelle les informations de contenu comportent au moins l'une d'informations de position relatives à la source Internet distante, de métadonnées du contenu, et d'une ou plusieurs commandes de contrôle prises en charge par le contenu.

6. Passerelle selon l'une quelconque des revendications 3 à 5, dans lequel le document ML est un document à langage de balisage extensible (XML).

7. Procédé d'accès à un contenu dans un réseau audio/vidéo comportant une pluralité de dispositifs audio/vidéo (32, 33, 34), le procédé comprenant :
la génération, au niveau d'un appareil de contrôle (100) associé au réseau, d'une requête d'informations de contenu concernant un contenu mémorisé au niveau d'une source Internet distante ;
l'envoi de la requête à une passerelle Internet associée au réseau :
la réception des informations de contenu requises au niveau de l'appareil de contrôle, en réponse à la requête ;
la réception, depuis un utilisateur, d'une sélection de contenu et d'une commande de contrôle de contenu concernant le contenu sélectionné ;
l'envoi de la sélection de contenu et de la commande de contrôle de contenu à la source Internet distante par le biais de la passerelle Internet ; et
la réception, au niveau du contrôleur, du contenu sélectionné sous forme de données de contenu en continu et conformément à la commande de contrôle,
la réception de données de contenu depuis la passerelle (200) avec un émetteur-récepteur de réseau audio/vidéo (110),
la réception de données de contrôle, les données de contrôle étant distinctes des données de contenu.

8. Procédé de fourniture d'un accès à un contenu dans un réseau audio/vidéo comportant une pluralité de dispositifs audio/vidéo (32, 33, 34), le procédé comprenant :
la requête d'informations de contenu concernant un contenu mémorisé au niveau d'une source Internet distante ;
la réception des informations de contenu depuis la source distante en réponse à la requête et l'envoi des informations de contenu à un appareil de contrôle (100) associé au réseau ;
la réception d'une sélection de contenu d'utilisateur et d'une commande de contrôle de contenu d'utilisateur relatives au contenu sélectionné depuis l'appareil de contrôle (100) ;
l'envoi de la sélection de contenu et de la commande de contrôle de contenu à la source Internet distante :
la réception du contenu sélectionné sous forme de document à langage de balisage ML ; et
la transmission des données de contenu correspondant au contenu sélectionné à l'appareil de contrôle (100) conformément à la commande de contrôle de contenu,
l'envoi des informations de contenu à l'appareil de contrôle (100) avec un émetteur-récepteur de serveur à protocole d'accès d'objet simple, et
la séparation des informations de contenu en données de contenu et données de contrôle, la transmission des données de contenu par le biais d'un émetteur-récepteur de réseau audio/vidéo (220) et la transmission des données de contrôle par le biais d'un émetteur-récepteur de serveur à protocole d'accès d'objet simple SOAP (230) à l'appareil de contrôle (100).

9. Programme informatique comprenant des instructions qui, à leur exécution par un appareil de traitement de données, amènent l'appareil de traitement de données à exécuter le procédé selon la revendication 7 ou 8.

10. Support lisible par ordinateur sur lequel est mémorisé un programme informatique selon la revendication 9.

11. Signal portant un programme informatique selon la revendication 9.

12. Système, comprenant :
une passerelle (200) ; et
un appareil (100) selon la revendication 1 ou 2.

13. Système selon la revendication 12, comprenant un dispositif de fourniture de service exploitable pour fournir des services Internet.

14. Système selon la revendication 12 ou la revendication 13, dans lequel la passerelle (200) est une passerelle selon l'une quelconque des revendications 3 à 6.

15. Passerelle (200) exploitable pour connecter un réseau audio/vidéo comportant une pluralité de dispositifs audio/vidéo (32, 33, 34) à l'Internet, la passerelle (200) comprenant :
une unité de requête d'informations de contenu (250) exploitable pour requérir des informations de contenu concernant un contenu mémorisé au niveau d'une source Internet distante ;
un moyen d'émetteur-récepteur Internet (210) exploitable pour recevoir les informations de contenu depuis la source Internet distante en réponse à la requête ;
un moyen (220, 230) pour envoyer les informations de contenu à un appareil de contrôle (100) associé au réseau ;
un moyen (220, 230) pour recevoir une sélection de contenu d'utilisateur et une commande de contrôle de contenu d'utilisateur concernant le contenu sélectionné depuis l'appareil de contrôle (100), dans lequel le moyen d'émetteur-récepteur Internet (210) est exploitable en outre pour envoyer la sélection de contenu et la commande de contrôle de contenu à la source Internet distante et pour recevoir le contenu sélectionné ; et
un émetteur-récepteur de réseau audio/vidéo (220) exploitable pour transmettre des données de contenu correspondant au contenu sélectionné à l'appareil de contrôle (100) conformément à la commande de contrôle de contenu,
dans lequel les informations de contenu sont reçues sous forme de document à langage de balisage ML ;
comprenant en outre une unité de gestion de contenu de service Internet (240) configurée pour analyser tous les messages de serveur de protocole d'accès d'objet simple SOAP reçus depuis le moyen d'émetteur-récepteur Internet (210) et convertir lesdits messages en un protocole audio/vidéo utilisé par le réseau audio/vidéo, et transmettre lesdits messages convertis à l'appareil de contrôle (100).
